# EUROPEAN PATENT APPLICATION

(11) **EP 3 958 593 A1**
(43) Date of publication of application: **23.02.2022**
(21) Application number: 20832798.1
(22) Date of filing: 26.04.2020
(51) Int. Cl.: H04W 4/02

(54) **WIRELESS POSITIONING METHOD, POSITIONING APPARATUS, AND NETWORK DEVICE**

(30) Priority: 28.06.2019 CN 201910579737
(71) Applicant: Huawei Technologies Co., Ltd., Shenzhen, Guangdong 518129 (CN)
(72) Inventor: LIU, Qinxin, Shenzhen, Guangdong 518129 (CN)
(74) Representative: Gill Jennings & Every LLP
(86) International application number: PCT/CN2020/086963
(87) International publication number: WO 2020/259055

(57) **Abstract**

A wireless positioning method is disclosed. The method includes: receiving a first multipath fingerprint sent by a first network device, where the first multipath fingerprint includes a plurality of TOAs and a plurality of AOAs, matching the first multipath fingerprint with a multipath fingerprint in a preset fingerprint database, and determining a location of a terminal based on a matching result. Therefore, a location of a terminal may be determined based on a multipath fingerprint of a cell, so that single-station positioning is implemented, and good positioning precision is achieved. This application further provides a positioning apparatus and a network device, to implement the foregoing wireless positioning method.

## Description

This application claims priority to Chinese Patent Application No. 201910579737.6, filed with the China National Intellectual Property Administration on June, 28, 2019 and entitled "WIRELESS POSITIONING METHOD, POSITIONING APPARATUS, AND NETWORK DEVICE", which is incorporated herein by reference in its entirety.

### TECHNICAL FIELD

This application relates to the wireless positioning field, and in particular, to a wireless positioning method, a positioning apparatus, and a network device.

### BACKGROUND

In recent years, with rapid development of wireless communication technologies and emergence of more geographic applications in the market, people have an increasing demand for accurate and reliable positioning in indoor and outdoor scenarios.

Currently, a wireless fingerprint positioning technology is generally as follows: For terminals in a serving cell, a location and radio signal features (such as TOAs of a plurality of cells) of each terminal are pre-collected, and the foregoing data collected from a large quantity of terminals is used as a feature database (also referred to as a fingerprint database). When a terminal needs to be positioned, TOAs of a plurality of cells are extracted by using a measurement report reported by the terminal, and the extracted radio signal features are matched with radio signal features (such as the TOAs of the plurality of cells) in the feature database to determine a location of the terminal. The plurality of cells include a serving cell and a neighboring cell of the serving cell.

Radio signal features of a plurality of cells are required for positioning according to the foregoing method. However, for an area in which network devices are rarely distributed in an edge area (for example, a rural area), it may be difficult for the terminal to obtain radio signal features of a plurality of cells. In this case, it is difficult to position the terminal according to the foregoing method.

### SUMMARY

This application provides a wireless positioning method, a positioning apparatus, and a network device, which can implement single-station positioning, can be applied to an area in which network devices are rarely distributed, and have better applicability.

A first aspect of this application provides a wireless positioning method, including: A first network device receives a sounding reference signal (SRS) and a cell identifier that are sent by a terminal; determines channel state information (CSI) of an uplink channel based on the SRS, then determines a first multipath fingerprint based on the CSI of the uplink channel, where the first multipath fingerprint includes a plurality of times of arrival (TOAs) and a plurality of angles of arrival (AOAs), and sends the first multipath fingerprint and the cell identifier to a positioning apparatus. After receiving the first multipath fingerprint sent by the first network device, the positioning apparatus matches the first multipath fingerprint with a multipath fingerprint in a preset fingerprint database; and determines a location of the terminal based on a matching result. Multipath components from the terminal to the first network device are in a one-to-one correspondence with the TOAs, and the multipath components from the terminal to the first network device are in a one-to-one correspondence with the AOAs.

According to this implementation, the first network device determines the CSI of the uplink channel based on the SRS sent by the terminal, determines the plurality of TOAs and the plurality of AOAs based on the CSI of the uplink channel, and then uses the plurality of TOAs and the plurality of AOAs as the first multipath fingerprint. Alternatively, the first network device may determine an RSRP based on the SRS sent by the terminal, and use the RSRP, the plurality of TOAs, and the plurality of AOAs as the first multipath fingerprint. In addition to the RSRP, the plurality of TOAs, and the plurality of AOAs, the first multipath fingerprint may further include one or more of the CSI of the uplink channel, a signal subspace of the CSI, and a PDP, an RSS, a Doppler frequency shift, and a polarization parameter that are of the uplink channel. The uplink channel is an uplink channel from the terminal to the first network device. Because terminals at different positions in a cell have different multipath fingerprints, single-station positioning can be implemented based on a multipath fingerprint between a network device and a terminal. This can be applied to an area in which network devices are rarely distributed, and has better applicability.

In a possible implementation, the method further includes: The positioning apparatus receives a beam identifier sent by the first network device; determines a beam fingerprint set corresponding to the beam identifier in a cell fingerprint set, and matches the first multipath fingerprint with a multipath fingerprint in the beam fingerprint set. According to this implementation, because the beam fingerprint set is smaller than the cell fingerprint set, an amount of calculation for matching can be reduced, and a positioning speed can be improved.

In another possible implementation, when the cell fingerprint set does not exist in the preset fingerprint database, the positioning apparatus determines a similar multipath fingerprint based on the first multipath fingerprint, where the similar multipath fingerprint is a multipath fingerprint similar to the first multipath fingerprint; calculates a location of a reflector based on the first multipath fingerprint and the similar multipath fingerprint; and calculates a location of the terminal based on the location of the reflector. According to this implementation, when positioning is difficult to be performed through matching, a terminal location can be calculated based on a multipath fingerprint, so that robustness of the positioning can be improved.

In another possible implementation, the positioning apparatus determines a similar multipath fingerprint based on a minimum mean square error estimation algorithm.

In another possible implementation, the positioning apparatus determines a similar multipath fingerprint based on a minimum distance measurement algorithm.

In another possible implementation, the positioning apparatus determines a similar multipath fingerprint based on a maximum likelihood estimation algorithm.

In another possible implementation, the positioning apparatus determines a similar multipath fingerprint based on a Bayesian estimation algorithm.

In another possible implementation, the positioning apparatus determines a similar multipath fingerprint based on a K-proximity algorithm.

In another possible implementation, the positioning apparatus determines a similar multipath fingerprint based on a support vector machine classification algorithm.

In another possible implementation, the positioning apparatus determines a similar multipath fingerprint based on a random forest classification algorithm.

In another possible implementation, the positioning apparatus determines a similar multipath fingerprint based on a neural network algorithm.

In another possible implementation, the method further includes: The first network device determines a moment at which a radio link between the terminal and the first network device is disconnected, uses the moment as a first moment, and obtains an identifier of the terminal; and sends the first moment and the identifier of the terminal to the positioning apparatus. A second network device receives an uplink pilot signal sent by the terminal, determines channel state information of an uplink channel based on the uplink pilot signal, then determines a PDP based on the channel state information of the uplink channel, and uses the PDP as a second multipath fingerprint. The second network device determines a moment at which the terminal establishes a radio link to the second network device, uses the moment as a second moment, and obtains the identifier of the terminal; and sends the second multipath fingerprint, the second moment, and the identifier of the terminal to the positioning apparatus. The positioning apparatus determines a time interval between the first moment and the second moment based on the identifier of the terminal; when the time interval between the first moment and the second moment is less than or equal to preset duration, matches the first multipath fingerprint and the second multipath fingerprint with a multipath fingerprint combination in the preset fingerprint database; and determines the location of the terminal based on a matching result. The second network device and the first network device are network devices of different standards. According to this implementation, positioning can be performed through matching based on the multipath fingerprint combination. Because the multipath fingerprint combination includes more radio signal features, the method can improve the positioning accuracy. In addition, the second network device may further determine a received signal strength RSS and a plurality of TOAs based on the channel state information of the uplink channel, and then use the PDP, the RSS, and the plurality of TOAs as the second multipath fingerprint. TOAs in the plurality of TOAs are in a one-to-one correspondence with multipath components from the terminal to the second network device. In addition to the RSS, the PDP, and the plurality of TOAs, the second multipath fingerprint may further include one or more of the CSI of uplink channel, a signal subspace of the CSI, a Doppler frequency shift, and a polarization parameter. The signal subspace of the CSI, the Doppler frequency shift, and the polarization parameter are all determined by the second network device based on the CSI of the uplink channel. The uplink channel is an uplink channel from the terminal to the second network device.

A second aspect of this application provides a wireless positioning method, including: A network device receives a sounding reference signal and a cell identifier that are sent by a terminal. The network device determines channel state information of an uplink channel based on the sounding reference signal. The network device determines a first multipath fingerprint based on the channel state information of the uplink channel, where the first multipath fingerprint includes a plurality of times of arrival (TOAs) and a plurality of angles of arrival (AOAs). The network device sends the first multipath fingerprint and the cell identifier to a positioning apparatus. According to this implementation, the network device determines the channel state information of the uplink channel based on the sounding reference signal sent by the terminal, determines the plurality of TOAs and the plurality of AOAs based on the channel state information of the uplink channel, and then uses the plurality of TOAs and the plurality of AOAs as the first multipath fingerprint. Alternatively, the network device may determine an RSRP based on the sounding reference signal, and use the RSRP, the plurality of TOAs, and the plurality of AOAs as the first multipath fingerprint. In addition to the RSRP, the plurality of TOAs, and the plurality of AOAs, the first multipath fingerprint may further include one or more of the CSI of uplink channel, a signal subspace of the CSI, and a PDP, an RSS, a Doppler frequency shift, and a polarization parameter that are of the uplink channel. Because terminals at different positions in a cell have different multipath fingerprints, single-station positioning can be implemented based on a multipath fingerprint between a network device and a terminal. This can be applied to an area in which network devices are rarely distributed, and has better applicability.

In a possible implementation, the method further includes: The network device receives a beam identifier sent by the terminal, and sends the beam identifier to the positioning apparatus.

A third aspect of this application provides a wireless positioning method, including: A positioning apparatus receives a multipath fingerprint sent by a network device, where the multipath fingerprint includes at least one of CSI of an uplink channel, a signal subspace of the CSI, a channel covariance matrix of the uplink channel, or a PDP of the uplink channel, matches the multipath fingerprint with a preset multipath fingerprint, and determines a location of the terminal based on a matching result. According to this implementation, because terminals at different positions in a cell correspond to different multipath fingerprints, single-station positioning can be implemented based on a multipath fingerprint. In addition, for the CSI of the uplink channel, the signal subspace of the CSI, the channel covariance matrix of the uplink channel, or the PDP of the uplink channel, a plurality of times of reflection of a signal by an obstacle have relatively little impact on the foregoing radio signal features. Therefore, in an indoor scenario, positioning performed through matching based on a multipath fingerprint formed by using the foregoing radio signal features has good positioning accuracy.

A fourth aspect of this application provides a wireless positioning method, including: A network device receives an uplink pilot signal sent by a terminal. The network device determines a multipath fingerprint based on the uplink pilot signal, where the multipath fingerprint includes at least one of CSI of an uplink channel, a signal subspace of the CSI, a channel covariance matrix of the uplink channel, or a PDP of the uplink channel. The network device sends the multipath fingerprint to a positioning apparatus. According to this implementation, the network device may obtain at least one of the CSI of the uplink channel, the signal subspace of the CSI, the channel covariance matrix of the uplink channel, or the PDP of the uplink channel as the multipath fingerprint.

A fifth aspect of this application provides a positioning apparatus. The positioning apparatus has a function of implementing the positioning apparatus in the first aspect. The function may be implemented by hardware, or may be implemented by hardware executing corresponding software. The hardware or software includes one or more modules corresponding to the foregoing function.

A sixth aspect of this application provides a network device. The network device has a function of implementing the network device in the second aspect. The function may be implemented by hardware, or may be implemented by hardware executing corresponding software. The hardware or software includes one or more modules corresponding to the foregoing function.

A seventh aspect of this application provides a positioning apparatus. The positioning apparatus has a function of implementing the positioning apparatus in the third aspect. The function may be implemented by hardware, or may be implemented by hardware executing corresponding software. The hardware or software includes one or more modules corresponding to the foregoing function.

An eighth aspect of this application provides a network device. The network device has a function of implementing the network device in the fourth aspect. The function may be implemented by hardware, or may be implemented by hardware executing corresponding software. The hardware or software includes one or more modules corresponding to the foregoing function.

A ninth aspect of this application provides a computer-readable storage medium. The computer-readable storage medium stores instructions, and when the instructions are run on a computer, the computer is enabled to perform the methods in the foregoing aspects.

A tenth aspect of this application provides a computer program product including instructions. When the computer program product is run on a computer, the computer is enabled to perform the methods in the foregoing aspects.

### BRIEF DESCRIPTION OF DRAWINGS

FIG. 1 is a schematic diagram of an application scenario of a wireless positioning method according to this application;
FIG. 2 is a schematic diagram of a structure of a positioning apparatus according to an embodiment of this application;
FIG. 3 is a signaling interaction diagram of a wireless positioning method according to an embodiment of this application;
FIG. 4 is another signaling interaction diagram of a wireless positioning method according to an embodiment of this application;
FIG. 5 is another schematic diagram of a structure of a positioning apparatus according to an embodiment of this application; and
FIG. 6 is another schematic diagram of a structure of a network device according to an embodiment of this application.

### DESCRIPTION OF EMBODIMENTS

This application provides a wireless positioning method, to obtain a plurality of radio signal features between a terminal and a network device as a multipath fingerprint, and perform single-station positioning based on the multipath fingerprint.

The following first describes technical terms in this application.

Fingerprints one to one correspond to geographical locations. The fingerprint may be any one or a combination of more than two radio signal features: channel state information (channel state information, CSI) of an uplink channel, a power delay profile (power delay profile, PDP), a received signal strength (received signal strength, RSS), a time of arrival (time of arrival, TOA), an angle of arrival (angle of arrival, AOA), a signal subspace, a Doppler frequency shift, a polarization parameter, or the like. It should be noted that for one radio signal feature, the network device may measure a cell to obtain a plurality of radio signal features as fingerprints, for example, a plurality of TOAs, a plurality of AOAs, or a plurality of groups of elements that are respectively corresponding to a plurality of subcarriers and in the CSI of the uplink channel. In addition, the fingerprint may further include another radio signal feature, for example, a reference signal received power (reference signal received power, RSRP) or a received signal code power (received signal code power, RSCP). In different communication standards, radio signal features for a same purpose may be described by using different terms. For example, in a long term evolution (long term evolution, LTE) system and a wideband code division multiple access (wideband code division multiple access, WCDMA) system, radio signal features used to indicate radio signal received strength are RSRP and RSCP respectively.

In time domain, the CSI may be represented by using a channel impulse response (channel impulse response, CIR). In frequency domain, the CSI may be represented by using a channel frequency response (channel frequency response, CFR). The CSI in this application is CSI of an uplink channel, and may also be referred to as a channel matrix of the uplink channel. In this application, the channel matrix of the uplink channel may be denoted as H, and H is used to indicate a status of a channel between a terminal antenna and an antenna array of the network device. In the channel matrix H of the uplink channel, one group of elements correspond to one subcarrier, and the group of elements may represent amplitude attenuation and a phase offset of the subcarrier. Causes of signal attenuation include path loss, reflection, scattering, and the like.

The RSS is an average value of powers of all signals received by using an antenna port of the terminal in one symbol (symbol).

The TOA is determined based on moments at which a transmitting node performs communication twice with a receiving node.

The AOA is the direction of arrival of a transmit signal. The AOA may be determined by the receiving node (for example, a network device). The transmit signal is a signal sent by the transmitting node.

It should be noted that the TOA and the AOA may be combined as a radio signal feature.

The signal subspace is a set of a plurality of eigenvectors of the CSI. Specifically, an antenna array includes M*N array elements, where M is a quantity of array elements in a vertical direction, and N is a quantity of array elements in a horizontal direction. H is a matrix of M×N×L, and L represents a quantity of sampling points. A channel covariance matrix Rₕₕ is obtained based on the CSI, where *Rₕₕ* = *E*{*HH^{H}*}, and E is an eigenvector. Feature decomposition is performed on Rₕₕ to obtain a plurality of eigenvalues A and a plurality of eigenvectors E, where the eigenvectors are in a one-to-one correspondence with the eigenvalues. Largest n eigenvalues are selected from the plurality of eigenvalues obtained through decomposition, and if a ratio of a sum of the largest n eigenvalues to a sum of all the eigenvalues is greater than a preset threshold, it is determined that eigenvectors corresponding to the largest n eigenvalues as the signal subspace. The largest n eigenvalues are first n eigenvalues in a sequence of eigenvalues arranged in descending order, n is a positive integer less than a total quantity of eigenvalues, and the total quantity of eigenvalues is a quantity of all eigenvalues obtained by performing decomposition on Rₕₕ. The preset threshold may be set based on an actual situation, for example, 90%, 95%, or 99%. A specific value is not limited herein.

The wireless positioning method provided in this application may be applied to a positioning system, and the positioning system includes a terminal, a network device, and a positioning apparatus. The positioning system may position a terminal in a line of sight (line of sight, LoS) environment or a non-line-of-sight (non-line-of-sight, nLoS) environment.

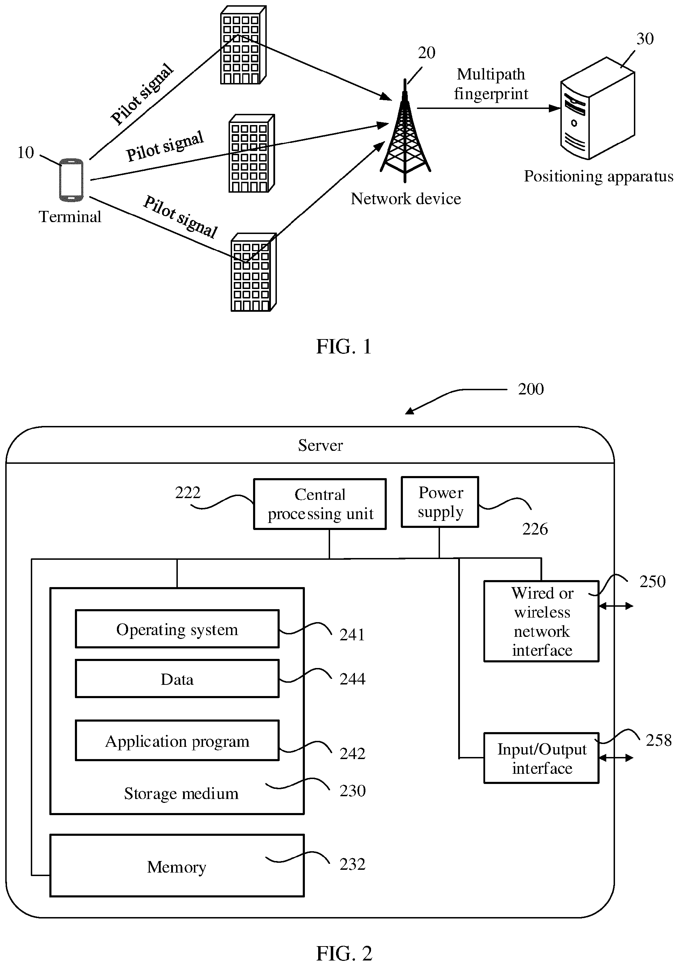

In an application scenario shown in FIG. 1, a terminal 10 transmits a pilot signal. Because the pilot signal is reflected or blocked by obstacles (for example, a building), the pilot signal reaches a network device 20 through a plurality of transmission paths. The network device 20 determines CSI of an uplink channel between the terminal 10 and the network device 20 based on the pilot signal. The network device 20 determines a multipath fingerprint based on the CSI of the uplink channel, and sends the multipath fingerprint to a positioning apparatus 30. The positioning apparatus 30 may determine a location of the terminal 10 based on the multipath fingerprint. It may be understood that the three transmission paths shown in FIG. 1 are examples for description, and should not be considered as a limitation on a multipath in this application. The foregoing description of transmitting the pilot signal through the plurality of transmission paths is intended to describe a multipath effect more clearly, and should not be considered as a limitation on the pilot signal, the uplink channel, or the multipath in this application. Another signal (for example, data) transmitted by the terminal 10 may also be transmitted to the network device 20 through the foregoing plurality of transmission paths.

The terminal 10 is also referred to as a terminal device or user equipment. The terminal 10 may be a personal computer, a mobile phone, a tablet computer, a smart wearable device (such as a smart watch or smart glasses), a personal digital assistant (personal digital assistant, PDA), or the like. The terminal 10 is connected to the network device 20 by using a radio link.

The network device 20 may be a 2G base station, a 3G base station, a 4G base station, a 5G base station, or a later evolved base station. For example, the network device 20 may be a GSM base station, a CDMA base station, a UMTS base station, an LTE base station, a Wi-Fi access node, or an access node in worldwide interoperability for microwave access (worldwide interoperability for microwave access, WiMAX).

The network device 20 and the positioning apparatus 30 may be connected by using a line link or a radio link.

The positioning apparatus 30 may be implemented by using a server, for example, a location server. FIG. 2 is a schematic diagram of a structure of a server 200 according to an embodiment of this application. Refer to FIG. 2. The server 200 may vary greatly due to different configurations or performance, and may include one or more central processing units (central processing units, CPUs) 222 and a memory 232, and one or more storage media 230 (for example one or more mass storage devices) for storing application programs 242 or data 244. The memory 232 and the storage medium 230 may be used for transient storage or persistent storage. A program stored in the storage medium 230 may include one or more modules (not shown in the FIG. 2), and each module may include a series of instruction operations for the server. Further, the central processing unit 222 may be configured to communicate with the storage medium 230. The series of instruction operations in the storage medium 230 are executed on the server 200.

The server 200 may further include one or more power supplies 226, one or more wired or wireless network interfaces 250, one or more input/output interfaces 258, and/or one or more operating systems 241, such as Windows Server TM, Mac OS XTM, Unix TM, Linux TM, and FreeBSD TM.

In this application, steps performed by the positioning apparatus in the following embodiments may be based on the server structure shown in FIG. 2.

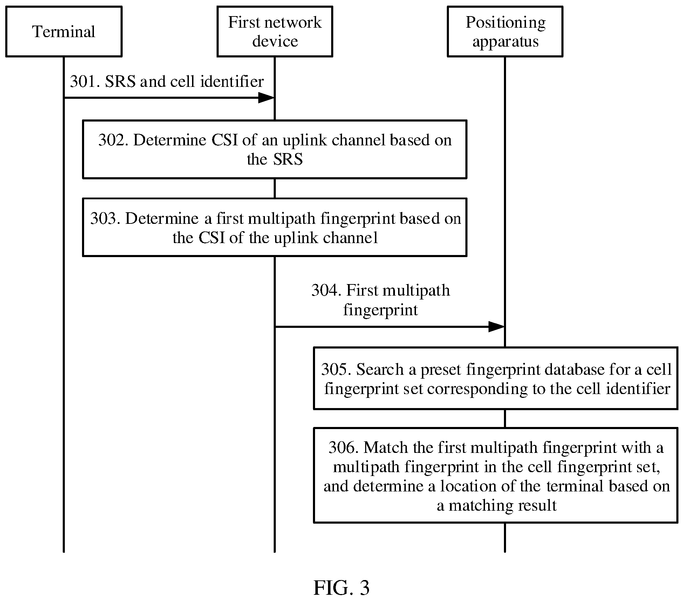

Refer to FIG. 3. An embodiment of a wireless positioning method provided in this application includes the following steps.

Step 301: A first network device receives a sounding reference signal (sounding reference signal, SRS) and a cell identifier that are sent by a terminal.

In this embodiment, the terminal sends the SRS and the cell identifier at different moments, and the first network device separately receives the SRS and the cell identifier. The cell identifier is used to identify a cell in which the terminal is located, and the cell in which the terminal is located is also referred to as a serving cell.

Step 302: The first network device determines CSI of an uplink channel based on the SRS.

Step 303: The first network device determines a first multipath fingerprint based on the CSI of the uplink channel.

The first multipath fingerprint may include a plurality of TOAs and a plurality of AOAs. There are multiple transmission paths for a signal from the terminal to the network device, and a multipath component refers to any one of the multiple transmission paths. Multipath components from the terminal to the first network device are in a one-to-one correspondence with the TOAs, and the multipath components from the terminal to the first network device are in a one-to-one correspondence with the AOAs, that is, a multipath component from the terminal to the first network device is corresponding to a group of TOA and AOA. Optionally, a maximum likelihood (maximum likelihood, ML) algorithm or a subspace based algorithm is used to calculate the CSI, to obtain a combination of a TOA and an AOA. The subspace based algorithm may be but is not limited to a multiple signal classification (multiple signal classification, MUSIC) algorithm, an estimation of signal parameters via rotational invariance techniques (estimation of signal parameters via rotational invariance techniques, ESPRIT) algorithm, and a Fast root-MUSIC (Fast root-MUSIC) algorithm.

It should be noted that, in addition to the plurality of TOAs and the plurality AOAs, the first multipath fingerprint may further include one or more of an RSRP, the CSI of the uplink channel, a signal subspace of the CSI, and a PDP, an RSS, a Doppler frequency shift, and a polarization parameter that are of the uplink channel. Generally, more types of radio signal features included in the multipath fingerprint indicate higher positioning accuracy.

The signal subspace of the CSI, and the PDP, the RSS, the Doppler frequency shift, and the polarization parameter that are of the uplink channel may all be determined based on the CSI. The uplink channel in this embodiment is an uplink channel from the terminal to the first network device.

For a method for determining the signal subspace of the CSI based on the CSI, refer to related records of the signal subspace in the foregoing descriptions.

Determining the PDP of the uplink channel based on the CSI may include: separately selecting an element corresponding to one antenna pair from the CSI, calculating one PDP based on the element corresponding to the antenna pair, and using a plurality of PDPs obtained through calculation as radio signal features used for positioning. The antenna pair includes one transmit antenna and one receive antenna.

Determining the RSS based on the CSI may include: separately selecting an element corresponding to one antenna pair from the CSI, calculating an RSS based on the element corresponding to the antenna pair, and using a plurality of RSSs obtained through calculation as radio signal features used for positioning.

In addition, for a method for determining the Doppler frequency shift and the polarization parameter based on the CSI, refer to a conventional technology.

Step 304: The positioning apparatus receives the first multipath fingerprint and the cell identifier that are sent by the first network device.

After the first network device determines the first multipath fingerprint based on the channel state information of the uplink channel, the first network device sends the first multipath fingerprint and the cell identifier to the positioning apparatus.

Step 305: The positioning apparatus searches a preset fingerprint database for a cell fingerprint set corresponding to the cell identifier.

The positioning apparatus searches the preset fingerprint database for the cell identifier. If the cell identifier exists, the positioning apparatus determines that the cell fingerprint set corresponding to the serving cell exists in the preset fingerprint database, or if the cell identifier does not exist, the positioning apparatus determines that the cell fingerprint set corresponding to the serving cell does not exist in the preset fingerprint database.

Step 306: When the cell fingerprint set exists in the preset fingerprint database, the positioning apparatus matches the first multipath fingerprint with a multipath fingerprint in the cell fingerprint set, and determines a location of the terminal based on a matching result.

When the cell fingerprint set exists in the preset fingerprint database, when a multipath fingerprint that is the same as the first multipath fingerprint exists in the cell fingerprint set, a location corresponding to the first multipath fingerprint is determined as the location of the terminal. When the multipath fingerprint that is the same as the first multipath fingerprint does not exist in the cell fingerprint set, the cell fingerprint set is searched for a multipath fingerprint similar to the first multipath fingerprint, and a location corresponding to a multipath fingerprint with highest similarity is determined as the location of the terminal.

Optionally, when the cell fingerprint set does not exist in the preset fingerprint database, the positioning apparatus determines the similar multipath fingerprint based on the first multipath fingerprint; calculates a location of a reflector based on the first multipath fingerprint and the similar multipath fingerprint; and calculates the location of the terminal based on the location of the reflector. The reflector is an object that reflects a signal and that is between the terminal and the network device, and a distance between the location of the reflector and the location of the terminal is less than a preset distance. If the distance between the location of the reflector and the location of the terminal is less than the preset distance, it indicates that the reflector is near the terminal. If the distance between the location of the reflector and the location of the terminal is greater than or equal to the preset distance, it indicates that the reflector is not near the terminal. The similar multipath fingerprint is a multipath fingerprint similar to the first multipath fingerprint, and may be specifically a multipath fingerprint that has highest similarity to the first multipath fingerprint in the preset fingerprint database.

The positioning apparatus determines the similar multipath fingerprint based on the first multipath fingerprint in the following methods:

Optionally, the positioning apparatus determines the similar multipath fingerprint based on a minimum mean square error (minimum mean squared error, MMSE) estimation algorithm.

Optionally, the positioning apparatus determines the similar multipath fingerprint based on a minimum distance measurement (minimum distance measure, MDM) algorithm.

Optionally, the positioning apparatus determines the similar multipath fingerprint based on a maximum likelihood estimation algorithm.

Optionally, the positioning apparatus determines the similar multipath fingerprint based on a Bayesian estimation algorithm.

Optionally, the positioning apparatus determines the similar multipath fingerprint based on a K-proximity algorithm.

Optionally, the positioning apparatus determines the similar multipath fingerprint based on a support vector machine (support vector machine, SVM) classification algorithm.

Optionally, the positioning apparatus determines the similar multipath fingerprint based on a random forest classification algorithm.

Optionally, the positioning apparatus determines the similar multipath fingerprint based on a neural network algorithm.

It should be noted that the first network device may further send an identifier of the terminal to the positioning apparatus, and the identifier of the terminal and the first multipath fingerprint may be set in one message, or set in different messages. The positioning apparatus may send, based on the identifier of the terminal sent by the first network device, the location of the terminal to the terminal by using the first network device.

In this embodiment, because terminals at different locations in a cell correspond to different multipath fingerprints, single-station positioning can be implemented based on a multipath fingerprint between a network device and a terminal. This can be applied to an area in which network devices are rarely distributed, and has better applicability.

Second, because the multipath fingerprint includes a plurality of radio signal features, positioning performed through fingerprint matching has good positioning accuracy.

Third, when the preset fingerprint database does not include the cell fingerprint set corresponding to the cell identifier, the location of the terminal can still be calculated based on a plurality of TOAs and a plurality of AOAs of the cell. This has good robustness.

In an optional embodiment,
the method further includes: The network device receives a beam identifier sent by the terminal, and sends the beam identifier to the positioning apparatus.

That the positioning apparatus matches the first multipath fingerprint with a multipath fingerprint in the cell fingerprint set includes: The positioning apparatus determines a beam fingerprint set corresponding to the beam identifier in the cell fingerprint set, and matches the first multipath fingerprint with a multipath fingerprint in the beam fingerprint set.

In this embodiment, in a 5G communication system or a later communication system, the terminal may send the beam identifier to the network device. The beam identifier and the cell identifier may be sent at the same time or separately. After receiving the beam identifier sent by the terminal, the network device sends the beam identifier to the positioning apparatus. The positioning apparatus receives the beam identifier sent by the first network device, and determines a beam fingerprint set corresponding to the beam identifier in the cell fingerprint set, matches the first multipath fingerprint with the multipath fingerprint in the beam fingerprint set, and determines the location of the terminal based on a matching result.

Because the beam fingerprint set is smaller than the cell fingerprint set, an amount of calculation can be reduced in a fingerprint matching process, and a matching speed can be improved.

In the foregoing wireless positioning method, a plurality of radio signal features of one cell are used as a multipath fingerprint. In the wireless positioning method described later in this application, a plurality of radio signal features of a plurality of cells are used as a multipath fingerprint. The following provides detailed descriptions:

In another optional embodiment, the foregoing method further includes:
The first network device determines a first moment, obtains the identifier of the terminal, and sends the first moment and the identifier of the terminal to the positioning apparatus. A second network device receives an uplink pilot signal sent by the terminal, and determines a second multipath fingerprint based on the uplink pilot signal; determines a second moment, and obtains the identifier of the terminal; and sends the second multipath fingerprint, the second moment, and the identifier of the terminal to the positioning apparatus. The positioning apparatus determines a time interval between the first moment and the second moment based on the identifier of the terminal. When the time interval between the first moment and the second moment is less than or equal to preset duration, the positioning apparatus matches the first multipath fingerprint and the second multipath fingerprint with a multipath fingerprint combination in the preset fingerprint database, and determines the location of the terminal based on a matching result.

In this embodiment, the first moment is a moment at which a radio link between the terminal and the first network device is disconnected. The second moment is a moment at which the terminal establishes a radio link to the second network device. The second network device and the first network device are network devices of different standards. It should be noted that the first moment and the identifier of the terminal may be set in one message, or may be set in two messages at different moments. Similarly, the second multipath fingerprint, the second moment, and the identifier of the terminal may be set in one message, or may be separately set in a plurality of messages at different moments.

That the second network device determines a second multipath fingerprint based on the uplink pilot signal may be specifically: The second network device determines CSI of the uplink channel based on the uplink pilot signal, and determines the second multipath fingerprint based on the CSI of the uplink channel. The second multipath fingerprint may include a PDP. In addition to the PDP, the second multipath fingerprint may further include one or more of an RSS, a plurality of TOAs, the CSI, a signal subspace of the CSI, and a PDP, a Doppler frequency shift, and a polarization parameter that are of the uplink channel. The uplink channel in this embodiment is an uplink channel from the terminal to the second network device.

After separately receiving the first moment and the identifier of the terminal that are sent by the first network device, and the second multipath fingerprint, the second moment, and the identifier of the terminal that are sent by the second network device, the positioning apparatus may determine, based on the identifier of the terminal, that the first moment and the second moment are corresponding to a same terminal.

After determining the time interval between the first moment and the second moment, the positioning apparatus compares the time interval with the preset duration. When the time interval between the first moment and the second moment is less than or equal to the preset duration, it indicates that after the radio link between the terminal and the first network device is disconnected, the terminal immediately establishes the radio link to the second network device. During this period, the location of the terminal remains unchanged by default, and the first multipath fingerprint and the second multipath fingerprint are multipath fingerprints from the same location. In this way, the first multipath fingerprint and the second multipath fingerprint are matched with the multipath fingerprint combination in the preset fingerprint database, and the location of the terminal is determined based on the matching result. Because the multipath fingerprint combination includes more radio signal features, positioning performed through matching based on the multipath fingerprint combination has better positioning accuracy.

It should be noted that the second network device may further send a cell identifier corresponding to the second network device to the positioning apparatus, and the positioning apparatus may determine, based on the cell identifier corresponding to the second network device, a cell fingerprint set corresponding to the second network device, and determine a fingerprint set used for matching based on the cell fingerprint set corresponding to the first network device and the cell fingerprint set corresponding to the second network device, to narrow a fingerprint matching range and improve a positioning speed.

For example, the terminal may send an SRS to an LTE base station, and the LTE base station determines a first multipath fingerprint based on the SRS. After a radio link between the terminal and the LTE base station is disconnected, the LTE base station sends, to the positioning apparatus, the identifier of the terminal and a moment T1 at which the radio link is disconnected, and the terminal sends an uplink pilot signal to a GSM base station. The GSM base station obtains a second multipath fingerprint based on an uplink pilot signal, determines a moment T2 at which a radio link is established, obtains the identifier of the terminal, and sends the second multipath fingerprint, T2, and the identifier of the terminal to the positioning apparatus. When a time interval between T1 and T2 is less than or equal to 1 second, the positioning apparatus uses the first multipath fingerprint and the second multipath fingerprint as a multipath fingerprint combination, and matches the multipath fingerprint combination with a multipath fingerprint combination in the preset fingerprint database, and determines the location of the terminal based on a matching result. A specific value of the preset duration may be set based on an actual situation, for example, 0.5 second, 1 second, or 2 seconds. This is not limited herein.

When the time interval between the first moment and the second moment is greater than the preset duration, it indicates that the terminal does not immediately establish a radio link to the second network device within a preset time window after the radio link between the terminal and the first network device is disconnected. In this case, it is considered that the location of the terminal may change. Therefore, it is determined that the first multipath fingerprint and the second multipath fingerprint are probably not multipath fingerprints from the same location. The preset duration is duration of the preset time window. In this way, the positioning apparatus does not perform the step of matching the first multipath fingerprint and the second multipath fingerprint with the multipath fingerprint combination in the preset fingerprint database, may match the second multipath fingerprint with the multipath fingerprint in the preset fingerprint database, and then determine the location of the terminal based on a matching result.

The foregoing describes a wireless positioning method in a scenario of network devices of different standards. The following describes a method in which a network device obtains two different types of measurement reports, and then uses multipath fingerprints carried in the different types of measurement reports as a multipath fingerprint combination.

In another optional embodiment, the foregoing method further includes: The terminal sends a first measurement report to the first network device, where the first measurement report carries a first multipath fingerprint and a first measurement moment. The terminal sends a second measurement report to the first network device, where the second measurement report carries a second multipath fingerprint and a second measurement moment. When a time interval between the first measurement moment and the second measurement moment is less than preset duration, the first network device combines the first multipath fingerprint and the second multipath fingerprint into a to-be-processed multipath fingerprint combination, and sends the to-be-processed multipath fingerprint combination to the positioning apparatus. The positioning apparatus matches the to-be-processed multipath fingerprint combination with a multipath fingerprint combination in the preset fingerprint database, and determines the location of the terminal based on a matching result.

In this embodiment, the first network device is a 5G base station in a non-standalone (non-standalone, NSA) architecture. The first measurement report is a measurement report of an LTE system, the second measurement report is a 5G measurement report, the first measurement moment is a moment at which the first measurement report is generated, and the second measurement moment is a moment at which the second measurement report is generated. The first multipath fingerprint includes one cell-level RSRP or a plurality of beam-level RSRPs, and the second multipath fingerprint includes a plurality of beam-level RSRPs.

When the time interval between the first measurement moment and the second measurement moment is less than the preset duration, it is considered by default that the terminal is at a same location at the first measurement moment and the second measurement moment, and the first multipath fingerprint and the second multipath fingerprint are multipath fingerprints from the same location. A specific value of the preset duration may be set based on an actual situation, for example, 0.5 second, 1 second, or 2 seconds. This is not limited herein. Compared with the first multipath fingerprint or the second multipath fingerprint, the multipath fingerprint combination includes more radio signal features. In this way, positioning performed through matching based on the multipath fingerprint combination has better positioning accuracy.

When the time interval between the first moment and the second moment is greater than the preset duration, it indicates that the terminal may be at different locations at the first measurement moment and the second measurement moment. Therefore, it is determined that the first multipath fingerprint and the second multipath fingerprint are probably not multipath fingerprints from the same location. In this way, the first network device does not perform the step of combining the first multipath fingerprint and the second multipath fingerprint into a to-be-processed multipath fingerprint combination, to avoid incorrect positioning.

The foregoing describes a multipath fingerprint including a TOA and an AOA. Wireless positioning performed by using the multipath fingerprint in an outdoor scenario has good positioning accuracy. However, in an indoor scenario, a signal is reflected a plurality of times, for example, reflected twice, three times, or more than 4 times, the TOA and the AOA respectively have large errors. Therefore, the foregoing multipath fingerprinting is not applicable to an indoor scenario. This application provides another multipath fingerprint, and the terminal can be well positioned in an indoor scenario based on the multipath fingerprint.

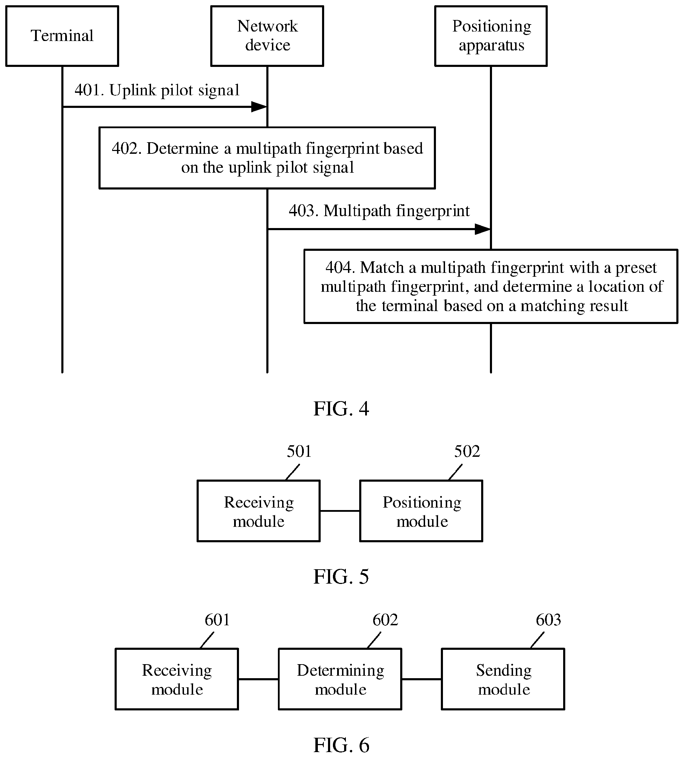

Refer to FIG. 4. Another embodiment of a wireless positioning method provided in this application includes the following steps.

Step 401: A network device receives an uplink pilot signal sent by a terminal.

Step 402: The network device determines a multipath fingerprint based on the uplink pilot signal.

The multipath fingerprint includes at least one of CSI of an uplink channel, a signal subspace of the CSI, a channel covariance matrix of the uplink channel, or a PDP of the uplink channel. The uplink channel is an uplink channel from the terminal to the network device.

Specifically, the network device determines the CSI of the uplink channel based on the uplink pilot signal, and determines the signal subspace of the CSI based on the CSI of the uplink channel. Alternatively, the network device determines the channel covariance matrix of the uplink channel based on the CSI of the uplink channel. Alternatively, the network device determines the PDP of the uplink channel based on the CSI of the uplink channel. For the foregoing method for determining the CSI of the uplink channel, the signal subspace of the CSI, the channel covariance matrix of the uplink channel, or the PDP of the uplink channel, refer to related records in the embodiment shown in FIG. 3.

Step 403: The network device sends the multipath fingerprint to a positioning apparatus.

Step 404: The positioning apparatus matches the multipath fingerprint with a preset multipath fingerprint, and determines a location of the terminal based on a matching result.

After receiving the multipath fingerprint sent by the network device, the positioning apparatus matches the received multipath fingerprint with the preset multipath fingerprint, and determines the location of the terminal based on the matching result.

For example, one terminal may send an uplink pilot signal to a plurality of network devices, and each network device can determine one signal subspace based on the uplink pilot signal sent by the terminal, and the plurality of network devices send the signal subspaces to the positioning apparatus. The positioning apparatus may receive the signal subspaces sent by the plurality of network devices, match the signal subspaces sent by the plurality of network devices with a preset signal subspace combination, and determine the location of the terminal based on a matching result.

In this embodiment, because terminals at different locations in a cell correspond to different multipath fingerprints, single-station positioning can be implemented based on a multipath fingerprint.

In addition, a plurality of reflections of a signal by an obstacle have relatively little impact on the CSI of the uplink channel, the signal subspace of the CSI, the channel covariance matrix of the uplink channel, or the PDP of the uplink channel. Therefore, in an indoor scenario, positioning performed through matching based on a multipath fingerprint formed by using the foregoing radio signal features has good positioning accuracy.

The foregoing describes the wireless positioning method in this application, and the following describes the positioning apparatus in this application. This application provides a positioning apparatus. The positioning apparatus can implement a function of the positioning apparatus in the embodiment in FIG. 3 or an optional embodiment.

Refer to FIG. 5. An embodiment of the positioning apparatus provided in this application includes:
a receiving module 501, configured to receive a first multipath fingerprint and a cell identifier that are sent by a first network device, where the first multipath fingerprint includes a plurality of times of arrival (TOAs) and a plurality of angles of arrival (AOAs), the plurality of TOAs and the plurality of AOAs are determined by the first network device based on channel state information of an uplink channel from a terminal to the first network device, and the cell identifier corresponds to a cell in which the terminal is located; and
a positioning module 502, configured to: search a preset fingerprint database for a cell fingerprint set corresponding to the cell identifier; and when the cell fingerprint set exists in the preset fingerprint database, match the first multipath fingerprint with a multipath fingerprint in the cell fingerprint set, and determine a location of the terminal based on a matching result.

In the optional embodiment,
the receiving module 501 is further configured to receive a beam identifier sent by the first network device; and
the positioning module 502 is specifically configured to: determine a beam fingerprint set corresponding to the beam identifier in the cell fingerprint set, and match the first multipath fingerprint with a multipath fingerprint in the beam fingerprint set.

In another optional embodiment,
the positioning module 502 is further configured to: when the cell fingerprint set does not exist in the preset fingerprint database, determine a similar multipath fingerprint based on the first multipath fingerprint, where the similar multipath fingerprint is a multipath fingerprint similar to the first multipath fingerprint; calculate a location of a reflector based on the first multipath fingerprint and the similar multipath fingerprint; and calculate a location of the terminal based on the location of the reflector.

In another optional embodiment,
the positioning module 502 is specifically configured to determine the similar multipath fingerprint based on a minimum mean square error (MMSE) estimation algorithm;
the positioning module 502 is specifically configured to determine the similar multipath fingerprint based on a minimum distance measurement (MDM) algorithm;
the positioning module 502 is specifically configured to determine the similar multipath fingerprint based on a maximum likelihood estimation algorithm;
the positioning module 502 is specifically configured to determine the similar multipath fingerprint based on a Bayesian estimation algorithm;
the positioning module 502 is specifically configured to determine the similar multipath fingerprint based on a K-proximity algorithm;
the positioning module 502 is specifically configured to determine the similar multipath fingerprint based on a support vector machine (SVM) classification algorithm;
the positioning module 502 is specifically configured to determine the similar multipath fingerprint based on a random forest classification algorithm; or
the positioning module 502 is specifically configured to determine the similar multipath fingerprint based on a neural network algorithm.

In another optional embodiment,
the receiving module 501 is further configured to receive a first moment and an identifier of the terminal that are sent by the first network device, where the first moment is a moment at which a radio link between the first network device and the terminal is disconnected;
the receiving module 501 is further configured to receive a second multipath fingerprint, a second moment, and an identifier of the terminal that are sent by a second network device, where the second multipath fingerprint includes a PDP, and the PDP is determined by the second network device based on channel state information of an uplink channel from the terminal to the second network device. The second moment is a moment at which the second network device establishes a radio link to the terminal, and the second network device and the first network device are network devices of different standards; and
the positioning module 502 is further configured to: determine a time interval between the first moment and the second moment based on the identifier of the terminal; when the time interval between the first moment and the second moment is less than or equal to preset duration, match the first multipath fingerprint and the second multipath fingerprint with a multipath fingerprint combination in the preset fingerprint database; and determine the location of the terminal based on a matching result.

This application further provides a network device. The network device can implement a function of the first network device in the embodiment in FIG. 3 or the optional embodiment. Refer to FIG. 6. An embodiment of the network device provided in this application includes:
a receiving module 601, configured to receive a sounding reference signal and a cell identifier that are sent by a terminal;
a determining module 602, configured to determine channel state information of an uplink channel based on the sounding reference signal, where
the determining module 602 is further configured to determine a first multipath fingerprint based on the channel state information of the uplink channel, where the first multipath fingerprint includes a plurality of times of arrival (TOAs) and a plurality of angles of arrival (AOAs); and
a sending module 603, configured to send the first multipath fingerprint and the cell identifier to a positioning apparatus.

In an optional embodiment,
the receiving module 601 is further configured to receive a beam identifier sent by the terminal; and
the sending module 603 is further configured to send the beam identifier to the positioning apparatus.

This application provides a positioning apparatus. The positioning apparatus can implement a function of the positioning apparatus in the embodiment shown in FIG. 4 or the optional embodiment. One embodiment of the positioning apparatus includes:
a receiving module, configured to receive a multipath fingerprint sent by a network device, where the multipath fingerprint includes at least one of channel state information (CSI) of an uplink channel, a signal subspace of the CSI, a channel covariance matrix of the uplink channel, or a power delay profile (PDP) of the uplink channel; and
a positioning module, configured to match the multipath fingerprint with a preset multipath fingerprint, and determine a location of the terminal based on a matching result.

In this embodiment, a connection relationship between the receiving module and the positioning module is similar to a connection relationship between the receiving module 501 and the positioning module 502 in the network device shown in FIG. 5.

This application further provides a network device. The network device can implement a function of the network device in the embodiment shown in FIG. 4 or the optional embodiment. An embodiment of the network device includes:
a receiving module, configured to receive an uplink pilot signal sent by a terminal;
a determining module, configured to determine a multipath fingerprint based on an uplink pilot signal, where the multipath fingerprint includes at least one of channel state information of an uplink channel, a signal subspace of the CSI, a channel covariance matrix of the uplink channel, or a power delay profile (PDP) of the uplink channel; and
a sending module, configured to send the multipath fingerprint to a positioning apparatus.

In this embodiment, a connection relationship among the receiving module, the determining module, and the sending module is similar to a connection relationship among the receiving module 601, the determining module 602, and the sending module 603 in the network device shown in FIG. 6.

This application provides a computer-readable storage medium, including instructions. When the instructions are run on a computer, the computer is enabled to perform the method provided in any one of the foregoing embodiments.

All or some of the foregoing embodiments may be implemented by using software, hardware, firmware, or any combination thereof. When software is used to implement the embodiments, the embodiments may be implemented all or partially in a form of a computer program product.

The computer program product includes one or more computer instructions. When the computer program instructions are loaded and executed on a computer, the procedure or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A wireless positioning method, comprising:
receiving, by a positioning apparatus, a first multipath fingerprint and a cell identifier that are sent by a first network device, wherein the first multipath fingerprint comprises a plurality of times of arrival (TOAs) and a plurality of angles of arrival (AOAs), both the plurality of TOAs and the plurality of AOAs are determined by the first network device based on channel state information of an uplink channel from a terminal to the first network device, and the cell identifier corresponds to a cell in which the terminal is located;
searching, by the positioning apparatus, a preset fingerprint database for a cell fingerprint set corresponding to the cell identifier; and
when the cell fingerprint set exists in the preset fingerprint database, matching, by the positioning apparatus, the first multipath fingerprint with a multipath fingerprint in the cell fingerprint set, and determining a location of the terminal based on a matching result.

2. The method according to claim 1, wherein
the method further comprises: receiving, by the positioning apparatus, a beam identifier sent by the first network device; and
the matching, by the positioning apparatus, the first multipath fingerprint with a multipath fingerprint in the cell fingerprint set comprises: determining, by the positioning apparatus, a beam fingerprint set corresponding to the beam identifier in the cell fingerprint set; and matching the first multipath fingerprint with a multipath fingerprint in the beam fingerprint set.

3. The method according to claim 1, wherein the method further comprises:
when the cell fingerprint does not exist in the preset fingerprint database, determining, by the positioning apparatus, a similar multipath fingerprint based on the first multipath fingerprint, wherein the similar multipath fingerprint is a multipath fingerprint similar to the first multipath fingerprint; calculating a location of a reflector based on the first multipath fingerprint and the similar multipath fingerprint; and calculating the location of the terminal based on the location of the reflector.

4. The method according to any one of claims 1 to 3, wherein the method further comprises:
receiving, by the positioning apparatus, a first moment and an identifier of the terminal that are sent by the first network device, wherein the first moment is a moment at which a radio link between the first network device and the terminal is disconnected;
receiving, by the positioning apparatus, a second multipath fingerprint, a second moment, and the identifier of the terminal that are sent by a second network device, wherein the second multipath fingerprint comprises a power delay profile (PDP), the PDP is determined by the second network device based on channel state information of an uplink channel from the terminal to the second network device, the second moment is a moment at which the second network device establishes a radio link to the terminal, and the second network device and the first network device are network devices of different standards;
determining, by the positioning apparatus, a time interval between the first moment and the second moment based on the identifier of the terminal; and
when the time interval between the first moment and the second moment is less than or equal to preset duration, matching, by the positioning apparatus, the first multipath fingerprint and the second multipath fingerprint with a multipath fingerprint combination in the preset fingerprint database, and determining the location of the terminal based on a matching result.

5. A wireless positioning method, comprising:
receiving, by a network device, a sounding reference signal (SRS) and a cell identifier that are sent by a terminal;
determining, by the network device, channel state information of an uplink channel based on the SRS;
determining, by the network device, a first multipath fingerprint based on the channel state information of the uplink channel, wherein the first multipath fingerprint comprises a plurality of times of arrival (TOAs) and a plurality of angles of arrival (AOAs); and
sending, by the network device, the first multipath fingerprint and the cell identifier to a positioning apparatus.

6. The method according to claim 5, wherein the method further comprises:
receiving, by the network device, a beam identifier sent by the terminal, and sending the beam identifier to the positioning apparatus.

7. A wireless positioning method, comprising:
receiving, by a positioning apparatus, a multipath fingerprint sent by a network device, wherein the multipath fingerprint comprises at least one of channel state information (CSI) of an uplink channel, a signal subspace of the CSI, a channel covariance matrix of the uplink channel, or a power delay profile (PDP) of the uplink channel; and
matching, by the positioning apparatus, the multipath fingerprint with a preset multipath fingerprint, and determining a location of the terminal based on a matching result.

8. A wireless positioning method, comprising:
receiving, by a network device, an uplink pilot signal sent by a terminal;
determining, by the network device, a multipath fingerprint based on the uplink pilot signal, wherein the multipath fingerprint comprises at least one of channel state information (CSI) of an uplink channel, a signal subspace of the CSI, a channel covariance matrix of the uplink channel, or a power delay profile (PDP) of the uplink channel; and
sending, by the network device, the multipath fingerprint to a positioning apparatus.

9. A positioning apparatus, comprising:
a receiving module, configured to receive a first multipath fingerprint and a cell identifier that are sent by a first network device, wherein the first multipath fingerprint comprises a plurality of times of arrival (TOAs) and a plurality of angles of arrival (AOAs), the plurality of TOAs and the plurality of AOAs are determined by the first network device based on channel state information of an uplink channel from a terminal to the first network device, and the cell identifier corresponds to a cell in which the terminal is located; and
a positioning module, configured to: search a preset fingerprint database for a cell fingerprint set corresponding to the cell identifier; and when the cell fingerprint set exists in the preset fingerprint database, match the first multipath fingerprint with a multipath fingerprint in the cell fingerprint set, and determine a location of the terminal based on a matching result.

10. The positioning apparatus according to claim 9, wherein
the receiving module is further configured to receive a beam identifier sent by the first network device; and
the positioning module is specifically configured to: determine a beam fingerprint set corresponding to the beam identifier in the cell fingerprint set; and match the first multipath fingerprint with a multipath fingerprint in the beam fingerprint set.

11. The positioning apparatus according to claim 9, wherein
the positioning module is further configured to: when the cell fingerprint set does not exist in the preset fingerprint database, determine a similar multipath fingerprint based on the first multipath fingerprint, wherein the similar multipath fingerprint is a multipath fingerprint similar to the first multipath fingerprint; calculate a location of a reflector based on the first multipath fingerprint and the similar multipath fingerprint; and calculate the location of the terminal based on the location of the reflector.

12. The positioning apparatus according to any one of claims 9 to 11, wherein
the receiving module is further configured to receive a first moment and an identifier of the terminal that are sent by the first network device, wherein the first moment is a moment at which a radio link between the first network device and the terminal is disconnected;
the receiving module is further configured to receive a second multipath fingerprint, a second moment, and the identifier of the terminal that are sent by a second network device, wherein the second multipath fingerprint comprises a power delay profile (PDP), the PDP is determined by the second network device based on channel state information of an uplink channel from the terminal to the second network device, the second moment is a moment at which the second network device establishes a radio link to the terminal, and the second network device and the first network device are network devices of different standards; and
the positioning module is further configured to: determine a time interval between the first moment and the second moment based on the identifier of terminal; when the time interval between the first moment and the second moment is less than or equal to preset duration, match the first multipath fingerprint and the second multipath fingerprint with a multipath fingerprint combination in the preset fingerprint database; and determine the location of the terminal based on a matching result.

13. A network device, comprising:
a receiving module, configured to receive a sounding reference signal (SRS) and a cell identifier that are sent by a terminal;
a determining module, configured to determine channel state information (CSI) of an uplink channel based on the SRS, wherein
the determining module is further configured to determine a first multipath fingerprint based on the CSI of the uplink channel, wherein the first multipath fingerprint comprises a plurality of times of arrival (TOAs) and a plurality of angles of arrival (AOAs); and
a sending module, configured to send the first multipath fingerprint and the cell identifier to a positioning apparatus.

14. The network device according to claim 13, wherein
the receiving module is further configured to receive a beam identifier sent by the terminal; and
the sending module is further configured to send the beam identifier to the positioning apparatus.

15. A positioning apparatus, comprising:
a receiving module, configured to receive a multipath fingerprint sent by a network device, wherein the multipath fingerprint comprises at least one of channel state information (CSI) of an uplink channel, a signal subspace of the CSI, a channel covariance matrix of the uplink channel, or a power delay profile (PDP) of the uplink channel; and
a positioning module, configured to match the multipath fingerprint with a preset multipath fingerprint, and determine a location of the terminal based on a matching result.

16. A network device, comprising:
a receiving module, configured to receive an uplink pilot signal sent by a terminal;
a determining module, configured to determine a multipath fingerprint based on the uplink pilot signal, wherein the multipath fingerprint comprises at least one of channel state information (CSI) of an uplink channel, a signal subspace of the CSI, a channel covariance matrix of the uplink channel, or a power delay profile (PDP) of the uplink channel; and
a sending module, configured to send the multipath fingerprint to a positioning apparatus.

17. A computer storage medium, wherein the computer storage medium stores instructions, and when the instructions are run on a computer, the computer is enabled to perform the method according to any one of claims 1 to 8.
